# EUROPEAN PATENT APPLICATION

(11) **EP 2 412 498 A1**
(43) Date of publication of application: **01.02.2012**
(21) Application number: 09842116.7
(22) Date of filing: 23.03.2009
(51) Int. Cl.: B26F 3/00, B23Q 11/00

(54) **ANTI-COLLISION DEVICE FOR A WATER JET CUTTING HEAD**

(71) Applicant: Mateu Sentamans, Emilio, 46610 Guadassuar (Valencia) (ES)
(72) Inventor: Mateu Sentamans, Emilio, 46610 Guadassuar (Valencia) (ES)
(74) Representative: Chanza Jordan, Dionisio
(86) International application number: PCT/ES2009/070070
(87) International publication number: WO 2010/109026

(57) **Abstract**

The invention relates to an anti-collision device for a water jet cutting head. The invention allows the water jet cutting of two- and three-dimensional planes of different materials together with the detection of collisions with unforeseen obstacles on horizontal working planes having spatial coordinates XY, thereby allowing the intelligent alteration and correction of the programmed navigation and working path thereof using a sequence of planned perception/action operations implemented with extensiometric gauges **(1)** disposed between a shaft **(5)** and a nozzle **(2)** or inside a height adjuster, wherein the cutting focusing element **(3)** and the abrasive holder **(4)** are connected to a device for controlling and adjusting the sensitivity of the gauge sensor **(1),** which device includes in front elevation a charge cell and cable **(13),** a terminal strip **(14),** an integrated circuit card **(15),** control buttons **(16)** and a digital numeric display **(17)** on which the user can view and measure the sensitivity of the sensor.

## Description

### Technical Sector

The invention that is protected in this patent is an anti-collision device for a water jet cutting head of two- and three-dimensional planes of different rigid materials ( metals, stone, ceramic, wood, etc..) by using an abrasive and soft materials (rubber, food, foam, etc..) using pure water; together with the detection of collisions with unforeseen obstacles allowing the intelligent alteration and correction of the programmed navigation and working path thereof using a sequence of planned perception/action operations.

It is therefore a device for a cutting head which consists of two main parts: One, a reaction to the impact sensor based on two extensiometric gauges projected in the directions of the cartesian coordinates in the XY horizontal space which is the core of the device, and the other a surveillance equipment, controlling and adjusting of the sensitivity constituted by an electronic card and peripherals needed for the transmission of signals from the sensor to the card and control card from which planned action is executed response.

The device according to the invention, has a sensory circuit with several elements arranged on the nozzle head or mounted on the probe module. In the event of a collision between the head and an obstruction or the workpiece, this circuit prevents the damage or destruction of the head and/ or focusing element.

This collision detection sensor is attached to the device and configured to provide a signal in the case where the approximation of the tool to the cutting part is within the distance limit of collision and / or obstruction.

### Background art

In progress with respect to conventional thermal methods used in cutting, such as plasma and laser, using a method of cutting abrasive fluid-jet non-thermal is being extended by its advantages.

The use of pressurized water to the water cut, including the cutting abrasive, it's a technique known for its virtues of cleanliness, accuracy, flexibility and production materials, ability to work in harsh environments as well as non-thermal deformation to the products worked.

Currently, several systems leading to high pressure fluid along a certain defined path are already known. The terms "high-pressure water" and "water jet" included in the present invention is understood to be included and defined for all types of fluids under high pressure, including but not limited to water at high pressure and water mixture - abrasive.

In such systems commonly referred to as machines of two, three and five axes. The conventional three-axis machines mounted on a head allow vertical movement along the Z axis to and from the workpiece. The base of the head is mounted on a bridge that moves parallel to the longitudinal axis of the bridge over the horizontal plane of work. The bridge is mounted on one or two rails that allow movement perpendicular to the longitudinal axis of the bridge. Thus, the jet of fluid at high pressure in the head moves along a path defined in the relative XY plane to the workpiece.

The five-axis conventional machines work similarly but allow movements on two additional rotational axis, usually an horizontal and a vertical axis. In cutting with a typical water jet, high pressure fluid - water - flows through a head with a focusing element that directs the water jet at high speed toward the workpiece that is located a few millimeters of focusing element. This fluid is under pressure that can reach up to 6000 bars in the systems that exist today, with the possibility of improving this limitation in future systems. The nozzle head includes a mixing tube for introducing the abrasive into the cutting system to form a stream of abrasive waterjet cutting, making it possible to treat a wider range of materials.

An important distinction between methods using thermal and fluid jet cutting is that the energy source is transferred thermal methods very close to the workpiece optimally. In the fluid jet cutting, there is this heat treatment does not alter the material properties of the workpiece.

So, It is essential that both methods of thermal and fluid jet cutting maintain optimum cutting away from the base of the tool to the workpiece.The head is controlled to execute certain moves through the workpiece and the cutting takes place in the desired shape. Finally, after the jet has crossed the cutting part, the energy of the jet is dissipated and the fluid is collected in a tank for disposal or further treatment.

In conclusion, the invention described incidents resolved on one of the working planes: the horizontal plane, facing a situation of perceived obstacles during the cutting of which is derived from a response action and the movement of the head.

Currently, as stated above, already known and used various means of collision prevention for water jet cutting, but all have drawbacks operational and functional, which the means developed and always have some limitations compared to the invention is presented.

So, there are known as devices, inventions with the publication following: U.S. Patent US6852002 STEWART et al. (2001) on a method and apparatus for controlling the Z axis and collision detection and recovery systems and water cut abrasive on an impact sensor mounted on a machine composed of two brackets, so that in case of collision, they are released to avoid further damage to the head and return to position after the collision. U.S. Patent US6814649 SCHMALL (2003) on an inductive proximity sensor for metallic and non-metallic tactile.

Or, on the same line, the application of ultrasonic sensors as Japanese Patent 2004-45600 SEKIYA (2004), inductive proximity sensors as well as the WO 96/39255 the C.H. HEIST CORP. (1996), or a set of networked sensors and the international patent outlines guiding surfaces, 2006/023813 FLOW INTERNATIONAL CORP (2006).

Likewise, and not in relation to the capacity of detection sensors, mechanical action, but with a response to a detected presence, the international published patent WO 97/20323 of COMPAGNIE GENERALE DES MATIERES NUCLEAIRE (1997).

Finally, there are prior documents the Japanese Patent with publication number JP11333656 NST KK (1999) and the Northamerican Patent US2001015514 BABAI (2001), respectively. In the last one, There is not an extensiometric and electric gauge sensor but a manual sensivity calibrated and one scanning,so its use, application and configuration is different, and always before to anti-collision operations.Whereas in the japanese invention the sensor is flexible and not rigid so it works jointly with the technical effect of the whole retractable with the corresponding tool wear. And before a possible collision interrupts and stops his work to protect the focusing element.

All of them a prior art of the invention presented, but away from the device of the invention, as they concerns about the use of different detection systems sensors, and mechanical motion response. As further precision current needs and anticipating risks of collision, as true preventive measures, the demands of new technological developments as they arise.

This inventive concept of anti-collision device, is subsidiary to the international patent application n° PCT/ES2009/070026 Hydrojet cutting head with five infinitely rotating axes MATEU SENTAMANS as a technical attachment of itself.

### Technical problem

The water cutting is a technical field of treatment of hard materials (metals, stone, ceramic, wood, etc..) using abrasive water for cutting soft materials (rubber, food, foam, etc..) Or, using pure water for the implementation and configuration of parts that require a level and skill of precision in the cutting tools against mechanical or conventional means (saws, cutters, milling, drilling, etc..) but without altering the temperature of the treated materials.

During the cutting maneuvers incidents may arise in the work scheduled to take place either by unexpected cut surface that works - metal or not - or in the cutting head and its jointed mechanism. The problems that often occur with greater frequency by collisions or crash into the process of abrasive waterjet cutting, we can list them and group them:
- Breaking of the sensor.
- Breaking of the nozzle and cutting focusing.
- Loss of time.
- Harm or damage of materials and cut pieces.
- Disposal of cut materials and parts useless.

### Technical Solution

The device comes to act as follows: collision sensors are based on gauges arranged concentrically on the nozzle head to the vertical axis as a ring in the case of heads cutting into 2 dimensions, or implanted in the probe module for the case of cutting heads in 3 dimensions. When the focusing element collides or hits the workpiece or other obstruction, the detector detects the collision and sends a stop signal to the control to stop the movement of the head and avoid the collision.

A key problem with crash sensors is that the sensor should stop the process to ensure a minimum of time to avoid damage to the focusing element. Due to the size and speed of the usual cutting systems, the control task to stop quickly to avoid a collision can be difficult. Another problem is that any change in the components of the head requires a recalibration routine to ensure optimal cutting distance. A serious collision may cause the sensor to be unusable.

Strictly speaking, this is the provision of a displacement sensor and / or resistive strain of two extensiometric gages mounted on one of the shafts cut above the nozzle in the cutting machines of 3 axes, or within the height adjustment accessorie in the 5 axis cutting machines. The sensor is connected to an electronic card with seven segment display or similar type to display a dimensionless threshold reporting the sensor sensitivity. Themselves contain buttons that allow the user's operation functions such as regulation of the sensitivity of the sensor.

The issuance of an electrical signal to a programmable logic device in turn sends that signal as alarm to the computer numerical controlled, and it allows the detection of the collision caused by the numerical control to interrupt and stop the movement of the head, and then will execute an action-user-defined response according to the needs of the situation: Stop and finish the cutting process permanently, remove the piece or obstruction which makes the cut and if possible, continue the process of cutting, etc...

All of this occurred on the horizontal XY plane over the entire surface of the cutting table.

### Advantageous effects

The main advantages of the present invention are provided by a technical, operational and economic realm. Technically, it involves the operation of the cutting head waterjet with a preventive measure against collisions where automated and regulated working paralyzes action developed, minimizing and removing faults or broken workpieces or focusing elements, nozzles, and heads.

Operating a cause the ability to anticipate collisions and it suppresses the risk of damages on the water jet cutting device or caused by wastes of the workpiece, and with a simple correction maneuver - either on the device or on the piece - is overcome the event. Furthermore, the sensitivity of the sensor - the relationship between the variation of the sensor and the measured effect is adjustable according the user interest by regulating the threshold of sensitivity. And finally, it attends an economic advantage, thus avoiding damage to machinery or working parts (metals, plastics, wood, etc..) that involves no cost to the user, otherwise by no using this device and crash prevention would be more common and likely.

### Description of the Drawings

For a better understanding of the general characteristics mentioned above, several drawings accompanying the present invention which are disclosed as specified below:

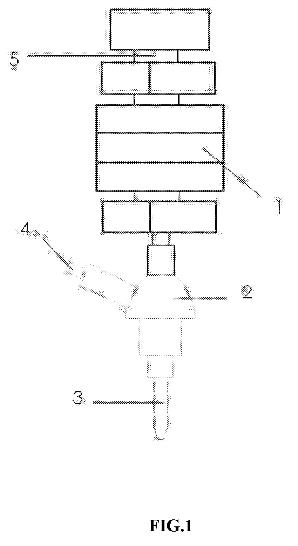

**Figure 1**: View of gauge sensor (1), arranged between a shaft (5) and a nozzle (2), with its cutting focusing element (3) and an abrasive holder (4).

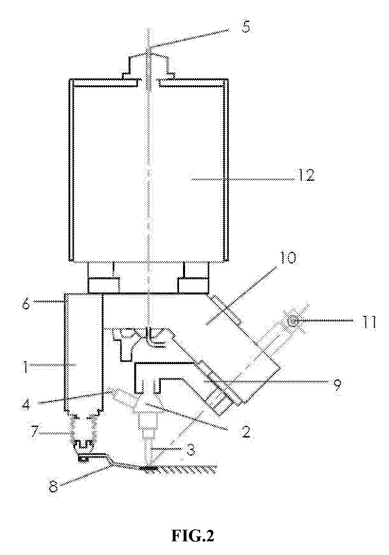

**Figure 2**: View of a gauge sensor (1), disposed within a height adjustment (6) with its bellows (7) and regulatory guide (8), arranged on a rotating base (10) that contains a nozzle support (9), with its nozzle (2), its cutting focusing element (3), along with a rotary joint (11) and base of the head (12).

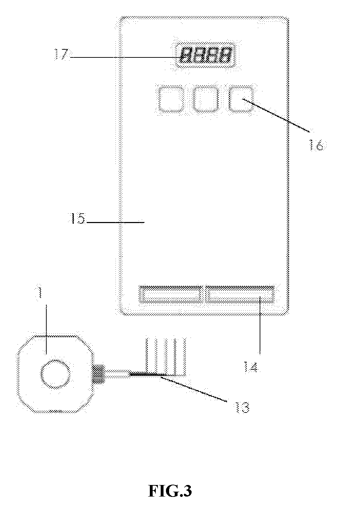

**Figure 3**: Front view of a surveillance, control and sensitivity adjustment equipment of gauge sensor (1) in front elevation a charge cell and cable (13), a terminal strip (14), an integrated circuit card (15), control buttons (16) and a digital numeric display (17) on which the user can view and measure the dimensionless threshold value depending on the increase or decrease in sensitivity of the sensor.

### Mode for invention

The operating mode of the device is as follows. If a collision does not occurs, the operation of head movements performed correctly programmed.

As mentioned above in the section of the technical solution, the sensor comprises strain gauges disposed on the nozzle head like concentrics to the vertical shaft. Being more of a gauge grouped and piled up. And so, we call them as resistive sensor gauge or gauge sensor.

Whereas, if a collision occurs between the cutting focusing element and the workpiece or some external element to the machine, and in particular, to the head, the sensor (gauge) will detect this collision. The collision is detected in the horizontal XY plane as the sensor or gauge is arranged in such directions, not in the vertical direction Z. Although a strong knock on the Z axis can be detected also by the gauge in the horizontal direction, because it would result in a deviation in the horizontal direction. This, regardless of whether the sensor-gauge is arranged concentrically in the nozzle or inside of a height adjustment.

Upon collision, the sensor will experience a change in its electrical resistance as a function of the deformation produced in it by the blow. This change in resistance is conditioned so that it can read a electric circuit board implemented in the same head module. This electric circuit board contains a digital display that shows a dimensionless threshold increase or decrease depending on the sensitivity of the sensor and can be regulated according to the needs or interests of the user.

When this value is higher, lower is the sensitivity in the detection of collision in the sensor, and vice versa. This value can be set at the discretion of the user by using the buttons on the electric circuit board.The electric circuit board sends an electrical signal to 24 Volt Programmable Logic Controller (PLC) that controls automated logic mode of operation of the device, and this in turn sends the signal to the computer numerical controlled (CNC). At the same time, the numerical control signal detected by turning on a light emitting diode (LED) or electroluminescent element on the monitor and an alarm signal also text displayed on the monitor. The NC program will be programmed to detect if this alarm indicating collision, there will be a program stop. At this point, the user can choose the next action to take, either remove the part or item that caused the collision, or move the head to another position manually, or start again from the beginning, and so on.

One of the many applications that can be used collision sensor is the possibility of knowing the position of the cut piece of work plane in the horizontal direction XY. By detecting the collision with the workpiece, the control reads this position in XYZ coordinates to determine the status of the part with respect to the plane formed by the head axes.

In conclusion, this procedure is operating by using the following technical means:

A resistive sensor of a set of more than one extensiometric gauge **(1),** arranged between a shaft **(5)** and a nozzle **(2),** with its cutting focusing element **(3)** and abrasive holder **(4)** connected to a device for controlling and adjusting the sensitivity of the gauge sensor **(1),** which device includes in front elevation a charge cell and cable **(13),** a terminal strip **(14),** an integrated circuit card **(15),** control buttons **(16)** and a digital numeric display **(17)** on which the user can view and measure the sensitivity of the sensor.

A second embodiment, would be the same resistive sensor of a set of more than one extensiometric gauge **(1),** disposed within a height adjuster **(6)** with its bellows **(7)** and regulatory guide **(8),arranged** on a rotating base **(10)** that contains a nozzle holder **(9),** with its nozzle **(2),** and its cutting focusing element **(3),** with a rotary joint **(11)** and base of the head **(12).**

## Claims

1. Anti-collision device for a water jet cutting head for the impact detection in the work of horizontal planes of values XY spatial coordinates for a constant and continuing cutting movement **characterised by** a resistive sensor of a set of more than one extensiometric gauge **(1),** arranged between a shaft **(5)** and a nozzle **(2),** with its cutting focusing element **(3)** and abrasive holder **(4)** connected to a device for controlling and adjusting the sensitivity of the gauge sensor **(1),** which device includes its charge cell and cable **(13),** a terminal strip **(14),** an integrated circuit card **(15)**, control buttons **(16)** and a digital numeric display **(17)** on which the user can view and measure the sensitivity of the sensor.

2. Anti-collision device for a water jet cutting head for the impact detection in the work of horizontal planes of values X Y spatial coordinates for a constant and continuing cutting movement according Claim.1 **characterised by** a resistive sensor of a set of more than one extensiometric gauge **(1),** disposed within a height regulator **(6)** with its bellows **(7)** and regulatory guide **(8),** arranged on a rotating base **(10)** that contains a nozzle support **(9),** with its nozzle **(2),** the cutting focusing element **(3),** along with a rotary joint **(11)** and base of the head **(12).**
